# EUROPÄISCHE PATENTSCHRIFT

(11) **EP 0 896 314 B1**
(45) Veröffentlichungstag und Bekanntmachung des Hinweises auf die Patenterteilung: **26.05.2004**
(21) Anmeldenummer: 98114142.7
(22) Anmeldetag: 29.07.1998
(51) Int. Cl.: G08G 1/0968

(54) **Navigationssystem für ein Kraftfahrzeug**
Car navigation system
Système de navigation pour véhicule

(30) Priorität: 08.08.1997 DE 19734365
(43) Veröffentlichungstag der Anmeldung: 10.02.1999
(73) Patentinhaber: Grundig Car InterMedia System GmbH, 90471 Nürnberg (DE)
(72) Erfinder: Körber, Matthias, 90762 Fuerth (DE)
(74) Vertreter: Schmidt, Christian, Dipl.-Phys.

(56) Entgegenhaltungen:
- EP-A- 0 638 887
- WO-A-92/10808
- DE-A- 19 547 574
- US-A- 5 311 197

## Beschreibung

Die Erfindung betrifft einen mobilen Rundfunkempfänger zum Einsatz in einem Kraftfahrzeug mit den Merkmalen des Oberbegriffs nach Anspruch 1 oder 2.

In den nächsten zehn Jahren wird für die Bundesrepublik Deutschland ein Anstieg des Individualverkehrs um 25 Prozent und ein Anstieg des Güterverkehrs um 80 Prozent prognostiziert. Eine Erweiterung des Straßennetzes ist aber für diesen Zeitraum nur um fünf Prozent geplant. Daher wächst das Verkehrsaufkommen deutlich stärker als das Straßennetz.
Außerdem finden in den verschiedensten Fahrzeugen Navigationssystem Einzug. Diese Navigationssystem ermöglichen es einem ortsunkundigen Fahrer sich relativ problemlos im Straßennetz zurecht zu finden.

Die derzeitigen und zukünftigen Verkehrsprobleme sind durch einen weiteren Ausbau des Straßennetzes nicht nachhaltig zu lösen. Nur durch eine Integration eines Navigationssystems mit einem dynamischen und intelligenten Verkehrsleit- und Informationssystem, in dem neben dem Individualverkehr auch der öffentliche Nah- und Fernverkehr eingebunden ist, ist dieses Verkehrsproblem zu lösen.

Aus der Internationalen Offenlegungsschrift WO 92/10824 A1 ist beispielsweise ein derartiges Verkehrsleit- und Informationssystem beschrieben. Bei diesem Verkehrsleitund Informationssystem wird mittels Sendern in Baken am Straßenrand Daten, wie beispielsweise Straßenkarten und Verkehrsinformationen, an die vorbeifahrenden Fahrzeuge gesendet. Die Fahrzeuge verfügen über einen entsprechenden Empfänger, mit dem die Daten empfangen werden können. Die Daten werden im Fahrzeug gespeichert und verarbeitet. Auf diese Weise ist es zum Beispiel möglich, das Fahrzeug zu einem vorher eingegebenen Zielpunkt zu führen. Zu diesem Zweck werden graphische und audiovisuelle Informationen erzeugt, die dem Fahrzeugführer entsprechende Instruktionen anzeigen. So kann der Weg zum eingegebene Zielort zum Beispiel zeitlich oder nach der Wegstrecke optimiert werden.

Aus EP 0 638 887 ist ein anderes Verkehrsleit- und Informationssystem bekannt. Dieses System besteht aus einer Navigationseinheit, einer Steuereinheit, einem Datenspeicher, einem Radioempfänger, einem Sender und einem Empfänger für Bakensender und einer Informationsausgabeeinheit. Die Navigationseinheit wird von einer GPS-Einheit und weiteren Sensoren, wie zum Beispiel Radsensoren, gebildet. Der Datenspeicher wird durch ein CD-ROM-Gerät gebildet und enthält digitalisierte Straßenkarten. Der Radioempfänger weist eine Einrichtung zur Auswertung von Verkehrsmeldungen auf. Die Navigationseinheit kann mit Hilfe der Digitalisierten Straßenkarten den jeweiligen Aufenthaltsort bestimmen. Ausgehend von diesem Aufenthaltsort wird der Fahrer mit Hilfe der Informationen aus Informationsausgabeeinheit an den gewünschten Zielort geleitet. Hierbei werden über den Radioempfänger empfangenen Verkehrsnachrichten bei der Routenwahl berücksichtigt. Außerdem kann mittels der von den Bakensendem stammenden Daten eine individuelle Ziellenkung erfolgen.

Aus WO-A-92/10808 ist eine Navigationseinheit für ein Fahrzeug bekannt. Bei dieser Navigationseinheit, welche in einem Fahrzeug eingebaut ist, besteht die Möglichkeit Routen an einer von der Navigationseinheit getrennten Einheit zu planen und diese Route in die Navigationseinheit zu übertragen.

Aus DE-A1-195 47 574 ist ein Verfahren für ein Fahrzeugleit- und Informationssystem bekannt. Mittels eines Funkübertragungssystems werden Daten sowie verkehrsrelevante Informationen zwischen einem Fahrzeug und einer Zentraleinheit übermittelt. In einer Datenverarbeitungseinheit der Zentraleinheit und/oder einer Datenverarbeitungseinheit des Fahrzeugs wird eine Fahrtroute berechnet und die Routendaten über das Funkübertragungssystem zwischen dem Fahrzeug und der Zentraleinheit übermittelt. Die Datenverarbeitungseinheit der Zentraleinheit und/oder die Datenverarbeitungseinheit des Fahrzeugs simuliert in Echtzeit die Fahrt des Fahrzeugs, wobei bei Durchführung von einer Echtzeitsimulation sowohl in der Datenverarbeitungseinheit des Fahrzeugs als auch in der Datenverarbeitungseinheit der Zentrale eine Synchronisation der Echtzeitsimulationen durch Signale erfolgt, die über das Funkübertragungssystem übermittelt werden. Die Fahrzeugposition in der Echtzeitsimulation der Fahrt sowie die zusätzlichen verkehrsrelevanten Informationen werden im Fahrzeug angezeigt.

Die bekannten Systeme weisen jedoch den Nachteil auf, daß die Installation der für die Datenübertragung nötigen Bakensender sehr aufwendig ist.

Im weiteren sind Systeme bekannt, bei denen an Stelle von Bakensendem ein bereits vorhandenes Funktelefonsystem zur Übertragung der Verkehrsleit- und Informationsdaten verwendet wird.

Diese Systeme weisen aber den Nachteil auf, daß die Funktelefonnetze nur eine geringe Datenübertragungsrate zur Verfügung stellen, wodurch die

Übertragung der Daten einen längeren Zeitraum in Anspruch nimmt. Dadurch wird das Telefonnetz stark belastet und es entstehen hohe Gebühren.
Außerdem bieten die bekannten Navigationssysteme keine Einbindung von anderen Verkehrsmitteln in eine Routenplanung. Eine Einbindung interaktiver Dienste ist ebenfalls nicht vorgesehen.

Im weiteren sind die verschiedensten Arten von Rundfunkempfängem für Kraftfahrzeuge bekannt.

Aufgabe der Erfindung ist es daher, einen mobilen Rundfunkempfänger zum Einsatz in einem Kraftfahrzeug anzugeben, der mit einem Navigationssystem gekoppelt ist, die Nutzung interaktiver Dienste integriert und ein Verkehrsleit- und Informationssystem nutzt.

Erfindungsgemäß wird diese Aufgabe durch die Merkmale des Anspruches 1 oder 2 gelöst.

Der Vorteil der Erfindung ist darin zu sehen, dass alle zur Verkehrsleitung und Information benötigten Daten in den digitalen Rundfunksignalen-übertragen werden. Über einen Rückkanal werden die interaktiven Dienste vom Benutzer des Systems initialisiert und gesteuert, d.h. interaktiv genutzt, außerdem sind in einer Speichereinheit der Navigationseinheit die Grunddaten zur Navigation enthalten und müssen nur einmal empfangen werden wobei eine Rundfunkempfängereinheit, insbesondere eine DAB-Empfängereinheit, alle weiteren zur Navigation erforderlichen Daten empfängt. Es ist kein CD-Gerät oder ein anderer Massenspeicher erforderlich.

Ein weiterer Vorteil der Erfindung nach Anspruch 6 ist darin zu sehen, dass bei der Routenplanung der Navigationsprozessor multimedial weitere vorhandene Verkehrsmittel neben dem Kraftfahrzeug, wie Flugzeug, Bahn, öffentliche Verkehrsmittel usw. berücksichtigt und die Auswahl nach billigster, schnellster, ökologischster Route erfolgt.

Ein Vorteil der Erfindung gemäß Anspruch 8 liegt darin, dass der Navigationsprozessor aktuelle Verkehrsfunkmeldungen in die Routenberechnung einbezieht und somit eine Verkehrsleitung ermöglicht und die Verkehrsdaten vom Navigationsprozessor, nach Bereichen sortiert, bearbeitet werden und standortbezogen in die Routenberechnung einfließen.

Ein Vorteil der Erfindung nach Anspruch 9 liegt darin, dass der Rundfunkempfänger einen Senderkettenwechsel vornimmt, wenn zur Navigation Daten aus einer anderen Senderkette benötigt werden.

Weitere Vorteile der Erfindung ergeben sich aus den abhängigen Ansprüchen und der nachfolgenden Beschreibung anhand eines Ausführungsbeispiels gemäß einer Figur.

Die Merkmale der Erfindung werden im folgenden an einem exemplarischen Ausführungsbeispiel anhand einer Zeichnungen erläutert. Das Ausführungsbeispiel ist keine erschöpfende Aufzählung der erfindungsgemäßen Ausgestaltungsmöglichkeiten, sondern hat nur beispielhaften Charakter. Die Merkmale der Ansprüche können einzeln oder in beliebiger Kombination miteinander benutzt werden.

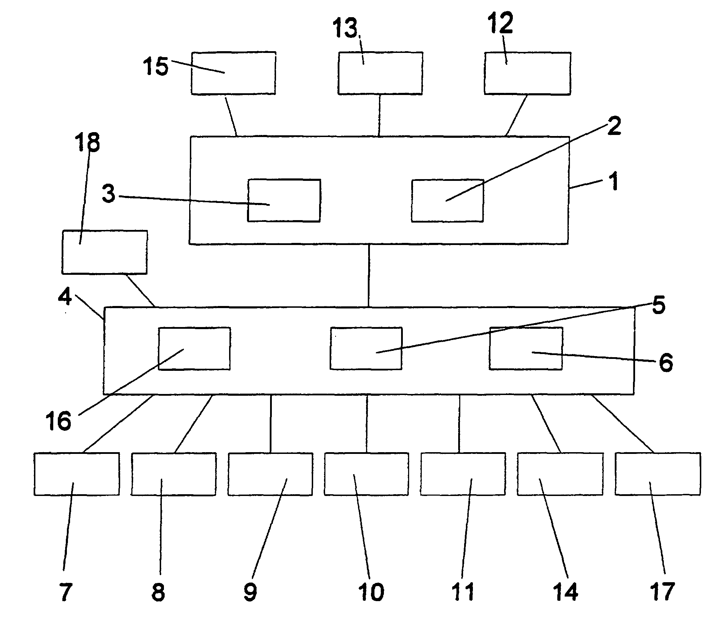

Es zeigt die Figur eine schematische Darstellung des Aufbaues des erfindungsgemäßen Rundfunkempfängers.

Der Rundfunkempfänger besteht aus mindestens einer Navigationseinheit 1, welche mindestens einen Navigationsprozessor 2 und mindestens eine Speichereinheit 3 umfasst, mindestens einer DAB-Multimedia-Einheit 4, welche wiederum mindestens eine digitale Rundfunkempfängereinheit 5, eine Rückkanaleinheit 6 und eine Steuereinheit 16 beinhaltet, mindestens einer visuellen Ausgabeeinheit 7, mindestens einer Eingabeeinheit 8, mindestens einer akustischen Ausgabeeinheit 9, zwei DAB-Frontendeinheiten 10 und 11, einer Positionsbestimmungseinheit 12, einer Sensoreinheit 13, mindestens einer Chipkartenleseeinheit 14, mindestens einer Kommunikationseinheit 15, einer Rundfunkempfängereinheit 18 und mindestens einer Schnittstelle 17.

Mittels der Rundfunkempfängereinheit 18 und der digitalen Rundfunkempfängereinheit 5 empfängt der Rundfunkempfänger die von einem Rundfunksender ausgestrahlten Sendungen. Der Rundfunkempfänger ist sowohl in der Lage digitale Rundfunksender, über die digitale Rundfunkempfängereinheit 5, als auch analoge Rundfunksender, über die Rundfunkempfängereinheit 18, zu empfangen. Der Rundfunkempfänger ist daher nicht ausschließlich auf ein Sendersystem oder eine Senderkette voreingestellt. Die Steuereinheit 16 steuert die Empfängereinheiten. Über die Eingabeeinheit 8 kann der Benutzer auswählen, welchen Sender und folglich welchen Empfänger er benutzen will.

Im weiteren ist eine Navigationseinheit 1 im Rundfunkempfänger integriert. Mittels der Eingabeeinheit 8 werden vom Fahrer des Kraftfahrzeuges die Zielkoordinaten eingegeben, beispielsweise durch Eingabe des Zielortes. Der Navigationsprozessor 2 der Navigationseinheit 1 ermittelt über die Positionsbestimmungseinheit 12 den aktuellen Standort des Kraftfahrzeuges und errechnet eine Zielführung. Hierzu verwendet er Daten, welche in der Speichereinheit 3 abgelegt sind.
In der Speichereinheit 3 sind lediglich einmal zu empfangende Grunddaten zur Navigation, wie beispielsweise Autobahnen, Staatsstraßen, Bundesstraßen und sämtliche Ortsnamen gespeichert. Der Navigationsprozessor kann mit diesen Daten die Zielführung über Straßen höherer Ordnung errechnen. Die weiteren zur Navigation notwendigen Daten, wie beispielsweise Straßennamen, Landstraßen niederer Ordnung, innerstädtische Straßen, erhält der Navigationsprozessor 2 von einer Zentralstelle übermittelt, die ständig zusammen mit den anderen Daten, wir Fahrpläne der öffentlichen Verkehrsmittel, Flugpläne usw. über die Senderkette ausgestrahlt werden.

Zur Übertragung dieser Daten sind zwei Varianten vorgesehen. Bei der einen fordert der Navigationsprozessor 2 über die Kommunikationseinheit 15 oder über die im digitalen Rundfunk implementierten Rückkanaleinheit 6 bei einem Diensteprovider die weiteren zur Navigation erforderlichen Daten an. Hierzu teilt er den aktuell über die Positionsbestimmungseinheit 12 ermittelten Standort des Kraftfahrzeuges an einen Diensteprovider mit. Der Diensteprovider stellt die angeforderten Daten zusammen und überträgt diese zusammen mit dem digitalen Rundfunksignal. Die digitale Rundfunkempfängereinheit 5 empfängt die angeforderten Daten des Diensteproviders zusammen mit dem Rundfunksignal. Die Steuereinheit 16 filtert aus dem Rundfunksignal die übertragenen Navigationsdaten heraus und leitete diese Daten an den Navigationsprozessor 2 weiter.

In einer zweiten Variante ist vorgesehen, daß im digitalen Rundfunksignal die weiteren zur Navigation notwendigen Daten, wie beispielsweise Straßennamen, Landstraßen niederer Ordnung, innerstädtische Straßen usw. kontinuierlich zusammen mit dem Audio-Rundfunksignal ausgestrahlt werden. Die Daten sind nach Regionen, in überregionale, regionale und lokale Daten aufgeteilt, wobei im digitalen Rundfunksignal überregionale, regionale und lokale Datenblöcke vorhanden sind. Der Navigationsprozessor 2 ermittelt aus dem ständig übertragenen Datenstrom mittels der digitalen Rundfunkempfängereinheit 5 und der Steuereinheit 16 die für die Navigation notwendigen Daten. Hierbei ist von Vorteil, daß keine Kommunikation bzw. kein Verbindungsaufbau mit einem Diensteprovider erfolgen muß.

Die digitale Rundfunkempfängereinheit 5 empfängt weitere Zusatzdaten, insbesondere aktuelle Verkehrsstörungen, Standorte von Sehenswürdigkeiten, Bahnhöfe, Flugplätze, Krankenhäusern, sowie alle für den Verkehr wichtigen Plätze und weiterhin Fährpläne von Bahn oder den öffentliche Nahverkehrsmitteln, sowie die aktuellen Flugpläne der Flugplätze. Diese Daten werden von der Senderkette ständig aktualisiert und zusammen mit dem Rundfunksignal ausgestrahlt. Die Steuereinheit 16 filtert aus dem Datenstrom, den die digitale Rundfunkempfängereinheit 5 kontinuierlich empfängt, diese Daten heraus und leitet sie an den Navigationsprozessor 2 weiter. Der Navigationsprozessor 2 ermittelt aus allen übermittelten Daten eine Routenberechnung und bezieht hierbei alle neben dem Kraftfahrzeug vorhandenen Verkehrsmittel und Abstellmöglichkeiten für das Kraftfahrzeug multimodal und/oder multimedial in die Routenberechnung einbezieht. Der Navigationsprozessor 2 unterbreitet mehrere Routenvorschläge und berechnet zu jedem Vorschlag die geschätzten Reisezeit, sowie die voraussichtlichen Kosten. Die Darstellung der Routenvorschläge erfolgt über die visuelle Ausgabeeinheit 7. Der gewünschten Vorschlag wählt der Fahrer über die Eingabeeinheit 8 aus. Die visuelle Ausgabeeinheit 7 kann auch als audiovisuelle Ausgabeeinheit ausgestaltet sein.

Der Navigationsprozessor 2 ermittelt mittels der Sensoreinheit 13 den aktuellen Bewegungs- und/oder Fahrtrichtungszustand des Kraftfahrzeuges, sowie die weiteren Fahrzeugbewegungsdaten. Diesen Daten werden bei der Navigation berücksichtigt

Die Steuereinheit 16 ermittelt mittels der digitalen Rundfunkempfängereinheit 5 die mit dem digitalen Rundfunksignal von der Senderkette ausgestrahlten Verkehrsfunkmeldungen und leitet diese an den Navigationsprozessor 2 weiter. Der Navigationsprozessor 2 bezieht diese Informationen bei der Routenberechnung auf Wunsch ein und ändert die Routen entsprechend ab und/oder schlägt andere Routen vor. Außerdem berücksichtigt der Navigationsprozessor 2 die überregionalen, die regionalen und die lokalen Verkehrsdaten.

Da die Zusatzdaten, die mit dem digitalen Rundfunksignal zusammen übertragen werden, jeweils nach Senderregionen getrennt sind, weist der Navigationsprozessor 2 die Steuereinheit 16 an, daß die digitale Rundfunkempfängereinheit 5, welche in der Multimediaeinheit 4 angeordnet ist, einen Senderkettenwechsel vornimmt, wenn der Navigationsprozessor 2 Daten aus einer anderen Senderkette benötigt.
In einer weiteren vorteilhaften Ausgestaltung der Erfindung ist vorgesehen, daß eine weitere Empfangseinheit vorhanden ist, über welche die benötigten weiteren Daten, insbesondere von einer anderen Senderkette, empfangen und dem Navigationsprozessor zur Verfügung gestellt werden.

Die Routenführung und Mitteilung der Route an den Fahrer des Kraftfahrzeuges erfolgt wahlweise über eine oder mehrere der Benutzerschnittstellen 7, 9, 10, 11. Die Routenführung kann über die Bedieneinheit 7 und/oder die Bedieneinheit 9 und/oder die Bedieneinheit 10 und/oder die Bedieneinheit 11 erfolgen.

An die Multimediaeinheit 4 ist ein Chipkartenlesegerät 14 angeschlossen. Mittels der Rückkanaleinheit 6 und/oder der Kommunikationseinheit 15, welche beide von der Steuereinheit 16 gesteuert werden, und dem Chipkartenlesegerät 14 kann der Nutzer des Kraftfahrzeuges, in welchem das Rundfunkgerät installiert ist, zahlungspflichtige Services nutzten. Es können auf diese Weise beispielsweise Flugtickets, Bahntickets geordert oder reserviert werden. Hotelbuchungen können vornehmen werden. Somit kann noch während der Anfahrt an den Zielort eine Buchung eines Hotels oder ähnlichem erfolgen. Dies erspart bei der Ankunft ein langwieriges Suchen. Insbesondere besteht so die Möglichkeit bereits bei der Routenplanung durch den Naviagtionsprozessor 2 Buchungen und/oder Reservierungen für andere Verkehrsmittel durchzuführen, wenn bei der Routenwahl ein weiteres Verkehrsmittel neben dem Kraftfahrzeug eingesetzt wird.

Die Steuereinheit 16 steuert insbesondere die Datenein- bzw. Datenausgabe von bzw. auf den Benutzerschnittstellen 7, 8, 9, 10, 11, welche an der DAB-Multimediaeinheit 4 angeschlossen sind.

Die Multimediaeinheit 4 weist Schnittstellen 17 auf, über welche externe Geräte angeschlossen werden können. Die Ansteuerung der Schnittstellen 17 erfolgt durch/über die Steuereinheit 16.

Als externen Geräte sind Funktelefone, CD-Abspielgeräte, DVD-Abspielgeräte vorgesehen. Die Bedienung dieser Geräte erfolgt über die Benzuterschnittstellen 7, 8, 9, 10, 11.

In einer weiteren vorteilhaften Ausgestaltung der Erfindung ist eine Notfallmeldeeinheit integriert. Bei einem Notfall, beispielsweise einem Unfall, wird dieses Ereignis selbständig von der Notfallmeldeeinheit erkannt. Über die Kommunikationseinheit 15 und/oder die Rückkanaleinheit 6 setzt dann die Notfallmeldeeinheit eine Notfallmeldung an eine zuständige Stelle ab. Die Notfallmedeeinheit zeichnet die Fahrzeugdaten auf und weist eine Funktionalität eines Unfalldatenspeichers auf.

Außerdem ist die digitale Rundfunkempfängereinheit 5 in der Lage multimediale Daten zu empfangen und diese über die Benutzerschnittstellen 7 bis 11 aus zu geben.

In vorteilhafter Ausgestaltung besteht die visuelle Ausgabeeinheit 7 aus mindestens zwei Monitoren, wobei zum Beispiel ein Monitor zur Anzeige der Navigationsdaten und weitere Monitore zur Anzeige der Multimedia-Daten vorgesehen sind.

Die Speichereinheit 3 ist wiederbeschreibbar. Dadurch können die in der Speichereinheit 3 gespeicherten Daten überschrieben werden. Insbesondere ist sind die Daten mittels eines Downloadvorgangs updatebar.

In vorteilhafter Weise ist die Erfindung derart ausgestaltet, daß die Bedieneinheit 7 als eine Ausgabeeinheit, insbesondere als eine visuelle Ausgabeeinheit oder ein Display, ausgestaltet ist, daß die Bedieneinheit 8 als eine Eingabeeinheit, insbesondere als eine akustische Eingabeeinheit oder Spracheingabeeinheit, die Bedieneinheit 9 als eine akustische Ausgabeeinheit, insbesondere als ein Lautsprecher und die Bedieneinheiten 10, 11 als DAB-Front-Ends oder als DAB-Head-Units ausgestaltet sind.

In einer weiteren vorteilhaften Ausgestaltung der Erfindung ist die Positionsbestimmungseinheit 12 als eine GPS-Einheit realisiert.

## Patentansprüche

1. Mobiler Rundfunkempfänger zum Einsatz in einem Kraftfahrzeug mit einer Navigationseinheit (1), Benutzerschnittstellen (7, 8, 9, 10, 11) und einer Multimedia-Einheit (4), bestehend aus mindestens einer digitalen Rundfunkempfängereinheit (5), wobei die Navigationseinheit (1) einen Navigationsprozessor (2) und eine Speichereinheit (3) aufweist, an die Navigationseinheit (1) eine Positionsbestimmungseinheit (12), eine Sensoreinheit (13) und eine Kommunikationseinheit (15) angeschlossen ist, die Benutzerschnittstellen (7, 8, 9, 10, 11) an die Multimediaeinheit (4) angeschlossen sind und von einer Steuereinheit (16) gesteuert werden,
**dadurch gekennzeichnet, dass**
in der Speichereinheit (3) der Navigationseinheit (1) lediglich Grunddaten, insbesondere Autobahnen, Staatsstraßen, Bundesstraßen und sämtliche Ortsnamen für die Navigation gespeichert sind, welche der Rundfunkempfänger einmalig empfängt, der Navigationsprozessor (2) alle zur Navigation notwendigen Daten, wie beispielsweise Straßennamen, Landstraßen niederer Ordnung, innerstädtische Straßen, über die Kommunikationseinheit (15) oder über eine Rückkanaleinheit (6), welche in der Multimedia-Einheit (4) angeordnet ist, bei einem Diensteprovider anfordert, hierzu den aktuell über die Positionsbestimmungseinheit (12) ermittelten aktuellen Standort des Kraftfahrzeuges übermittelt, und die für die Navigation noch notwendigen Daten vom Diensteprovider zusammen mit dem digitalen Rundfunksignal übertragen werden, die digitalen Rundfunkempfängereinheit (5) die angeforderten Daten des Diensteproviders empfängt und an den Navigationsprozessor (2) weiterleitet.

2. Mobiler Rundfunkempfänger zum Einsatz in einem Kraftfahrzeug mit einer Navigationseinheit (1), Benutzerschnittstellen (7, 8, 9, 10, 11) und einer Multimedia-Einheit (4), bestehend aus mindestens einer digitalen Rundfunkempfängereinheit (5), wobei die Navigationseinheit (1) einen Navigationsprozessor (2) und eine Speichereinheit (3) aufweist, an die Navigationseinheit (1) eine Positionsbestimmungseinheit (12), eine Sensoreinheit (13) und eine Kommunikationseinheit (15) angeschlossen ist, die Benutzerschnittstellen (7, 8, 9, 10, 11) an die Multimediaeinheit (4) angeschlossen sind und von einer Steuereinheit (16) gesteuert werden,
**dadurch gekennzeichnet, dass**
in der Speichereinheit (3) der Navigationseinheit (1) lediglich Grunddaten, insbesondere Autobahnen, Staatsstraßen, Bundesstraßen und sämtliche Ortsnamen für die Navigation gespeichert sind, welche der Rundfunkempfänger einmalig empfängt, der Navigationsprozessor (2) alle zur Navigation notwendigen Daten, wie beispielsweise Straßennamen, Landstraßen niederer Ordnung, innerstädtische Straßen, der Navigationsprozessor (2) die weiteren zur Navigation notwendigen Daten, wie beispielsweise Straßennamen, Landstraßen niederer Ordnung, innerstädtische Straßen mit dem digitalen Rundfunksignal als ständig ausgestrahlte Daten erhält und diese Daten nach Regionen, in überregionale, regionale und lokale Daten aufgeteilt sind, wobei im digitalen Rundfunksignal überregionale, regionale und lokale Datenblöcke vorhanden sind, diese notwendigen und empfangenen Daten der Navigationsprozessor (2) zur Navigation verwendet.

3. Mobiler Rundfunkempfänger zum Einsatz in einem Kraftfahrzeug nach Anspruch 1,
**dadurch gekennzeichnet, dass**
die digitale Rundfunkempfängereinheit (5) weitere vom Diensteprovider übermittelte Zusatzdaten, insbesondere aktuelle Verkehrsstörungen, Standorte von Sehenswürdigkeiten, Bahnhöfe, Flugplätze, Krankenhäusern, sowie alle für den Verkehr wichtigen Plätze und weiterhin Fährpläne von Bahn oder den öffentliche Nahverkehrsmitteln, sowie die aktuellen Flugpläne, empfängt und der Navigationsprozessor (2) diese Zusatzdaten auswertet.

4. Mobiler Rundfunkempfänger zum Einsatz in einem Kraftfahrzeug nach Anspruch 2,
**dadurch gekennzeichnet, dass**
die digitale Rundfunkempfängereinheit (5) weitere Zusatzdaten, insbesondere aktuelle Verkehrsstörungen, Standorte von Sehenswürdigkeiten, Bahnhöfe, Flugplätze, Krankenhäusern, sowie alle für den Verkehr wichtigen Plätze und weiterhin Fährpläne von Bahn oder den öffentliche Nahverkehrsmitteln, sowie die aktuellen Flugpläne der Flugplätze, empfängt, welche von der Senderkette ständig aktualisiert und mitausgestrahlt werden, und der Navigationsprozessor (2) diese Zusatzdaten auswertet.

5. Mobiler Rundfunkempfänger zum Einsatz in einem Kraftfahrzeug nach
einem der Ansprüche 1 bis 4,
**dadurch gekennzeichnet, dass**
die Speichereinheit (3) wiederbeschreibbar ist,

6. Mobiler Rundfunkempfänger zum Einsatz in einem Kraftfahrzeug nach
einem der Ansprüche 1 bis 5,
**dadurch gekennzeichnet, dass**
der Navigationsprozessor (2) aus allen übermittelten Daten eine Routenberechnung vornimmt und hierbei alle neben dem Kraftfahrzeug vorhandenen Verkehrsmittel und Abstellmöglichkeiten für das Kraftfahrzeug multimodal und/oder multimedial in die Routenberechnung einbezieht,
der Navigationsprozessor (2) mehrere Routenvorschläge unterbreitet und hierzu die geschätzten Reisezeiten ermitteln, sowie die voraussichtlichen Kosten errechnet.

7. Mobiler Rundfunkempfänger zum Einsatz in einem Kraftfahrzeug nach
einem der Ansprüche 1 bis 6,
**dadurch gekennzeichnet, dass**
der Navigationsprozessor (2) mittels der Sensoreinheit (13) den aktuellen Bewegungsund/oder Fahrtrichtungszustand und die Fahrzeugbewegungsdaten ermittelt und diesen bei der Navigation einbezieht.

8. Mobiler Rundfunkempfänger zum Einsatz in einem Kraftfahrzeug nach
einem der Ansprüche 1 bis 7,
**dadurch gekennzeichnet, dass**
die digitale Rundfunkempfängereinheit (5) die mit dem digitalen Rundfunksignal von der Senderkette ausgestrahlten Verkehrsfunkmeldungen empfängt, an den Navigationsprozessor (2) weiterleitet, dieser diese Informationen bei der Routenberechnung einbezieht und die Routen entsprechend abändert und/oder andere Routen vorschlägt und der Navigationsprozessor (2) die überregionalen, die regionalen und die lokalen Verkehrsdaten aus dem übertragenen Daten ermittelt und standortbezogen in die Routenplanung einbezieht.

9. Mobiler Rundfunkempfänger zum Einsatz in einem Kraftfahrzeug nach
einem der Ansprüche 1 bis 8,
**dadurch gekennzeichnet, dass**
der Navigationsprozessor (2) die digitale Rundfunkempfängereinheit (5) der Multimediaeinheit (4) ansteuert damit diese einen Senderkettenwechsel vornimmt, wenn der Navigationsprozessor (2) Daten aus einer anderen Senderkette benötigt und die Routenführung und Mitteilung der Route an den Fahrer des Kraftfahrzeuges wahlweise über eine oder mehrere der Benutzerschnittstellen (7, 9, 10, 11) erfolgt.

10. Mobiler Rundfunkempfänger zum Einsatz in einem Kraftfahrzeug nach
einem der Ansprüche 1 bis 9,
**dadurch gekennzeichnet, dass**
die Bedieneinheit (7) eine Ausgabeeinheit, insbesondere eine visuelle Ausgabeeinheit oder ein Display, ist,
die Bedieneinheit (8) eine Eingabeeinheit, insbesondere eine akustische Eingabeeinheit oder Spracheingabeeinheit, ist,
die Bedieneinheit (9) eine akustische Ausgabeeinheit, insbesondere ein Lautsprecher, ist und
die Bedieneinheiten (10, 11) DAB-Front-Ends oder DAB-Head-Units sind.

11. Mobiler Rundfunkempfänger zum Einsatz in einem Kraftfahrzeug nach
einem der Ansprüche 1 bis 10,
**dadurch gekennzeichnet, dass**
die Routenführung über die Bedieneinheit (7) und/oder die Bedieneinheit (9) und/oder die Bedieneinheit (10) und/oder die Bedieneinheit (11) erfolgt.

12. Mobiler Rundfunkempfänger zum Einsatz in einem Kraftfahrzeug nach
einem der Ansprüche 1 bis 11,
**dadurch gekennzeichnet, dass**
an die Multimediaeinheit (4) ein Chipkartenlesegerät (14) angeschlossen ist und mittels des Rückkanals und/oder dem Chipkartenlesegerät (14) des mobile Rundfunkempfänger zahlungspflichtige Services genutzten können und mittels der Multimediaeinheit (4) der Benutzer Flugtickets oder Bahntickets ordem und/oder Hotelbuchungen vornehmen kann.

13. Mobiler Rundfunkempfänger zum Einsatz in einem Kraftfahrzeug nach
einem der Ansprüche 1 bis 12,
**dadurch gekennzeichnet, dass**
die Multimediaeinheit (4) eine Steuereinheit (16) aufweist, welche die Datenein- bzw. Datenausgabe von bzw. auf den Benutzerschnittstellen (7, 8, 9, 10, 11) steuert.

14. Mobiler Rundfunkempfänger zum Einsatz in einem Kraftfahrzeug nach
einem der Ansprüche 1 bis 13,
**dadurch gekennzeichnet, dass**
die Multimediaeinheit (4) Schnittstellen (17) aufweist, über welche externe Geräte angeschlossen werden können, die Ansteuerung der Schnittstellen (17) durch die Steuereinheit (16) erfolgt, die externen Geräte Funktelefone, CD-Abspielgeräte, DVD-Abspielgeräte sind und diese Geräte über die Benzuterschnittstellen (7, 8, 9, 10, 11) angesteuert werden.

15. Mobiler Rundfunkempfänger zum Einsatz in einem Kraftfahrzeug nach einem der Ansprüche 1 bis 14,
**dadurch gekennzeichnet, dass**
eine Notfallmeldeeinheit integriert ist, welche einen Notfall, wie beispielsweise einen Unfall erkennt, und über die Kommunikationseinheit (15) eine Notfallmeldung an eine zuständige Stelle absetzt und die Fahrzeugdaten ständig aufzeichnet.

16. Mobiler Rundfunkempfänger zum Einsatz in einem Kraftfahrzeug nach einem der Ansprüche 1 bis 15,
**dadurch gekennzeichnet, dass**
die digitale Rundfunkempfängereinheit (5) multimediale Daten empfängt und diese über die Benutzerschnittstellen (7 -11) ausgibt, die visuelle Ausgabeeinheit (7) aus mindestens zwei Monitoren besteht, wobei ein Monitor zur Anzeige der Navigationsdaten und weitere Monitore zur Anzeige der Multimedia-Daten vorgesehen sind und die Positionsbestimmungseinheit (12) eine GPS-Einheit ist.

## Claims

1. Mobile radio receiver for use in an automotive vehicle, having a navigation unit (1), user interfaces (7, 8, 9, 10, 11) and a multimedia unit (4), comprising at least one digital radio receiver unit (5), wherein the navigation unit (1) has a navigation processor (2) and a memory unit (3), a position-determining unit (12), a sensor unit (13) and a communication unit (15) are connected to the navigation unit (1), and the user interfaces (7, 8, 9, 10, 11) are connected to the multimedia unit (4) and are controlled by a control unit (16) **characterized in that** there are stored in the memory unit (3) of the navigation unit (1) for the purpose of navigation only basic data, in particular motorways, national roads, federal roads and all place names, which the radio receiver receives once, the navigation processor (2) requests all the data necessary for navigation, such as, for example, street names, country roads of lower order, inner city roads, from a service provider via the communications unit (15) or via a return-channel unit (6) that is disposed in the multimedia unit (4), transmits for this purpose the actual position of the automotive vehicle currently determined by means of the position-determining unit (12), and the data still necessary for the navigation are transmitted by the service provider together with the digital radio signal, the digital radio receiver unit (5) receives the requested data of the service provider and passes it to the navigation processor (2).

2. Mobile radio receiver for use in an automotive vehicle having a navigation unit (1), user interfaces (7, 8, 9, 10, 11) and a multimedia unit (4), comprising at least one digital radio receiver unit (5), wherein the navigation unit (1) has a navigation processor (2) and a memory unit (3), a position-determining unit (12), a sensor unit (13) and a communication unit (15) is connected to the navigation unit (1), and the user interfaces (7, 8, 9, 10, 11) are connected to the multimedia unit (4) and are controlled by a control unit (16) **characterized in that** there are stored in the memory unit (3) of the navigation unit (1) for the purpose of navigation only basic data, in particular motorways, national roads, federal roads and all place names, which the radio receiver receives once, the navigation processor (2) requests all the data necessary for navigation, such as, for example, street names, country roads of lower order, inner city roads, the navigation processor (2) receives the further data necessary for navigation, such as, for example, street names, country roads of lower order, inner city roads with the digital radio signal as data continuously broadcast and said data are divided up according to regions into national, regional and local data,
wherein national, regional and local data blocks are present in the digital radio signal and the navigation processor (2) uses these necessary and received data for navigation.

3. Mobile radio receiver for use in an automotive vehicle according to Claim 1, **characterized in that** the digital radio receiver unit (5) receives further additional data transmitted by the service provider, in particular current traffic disruptions, locations of sights, railway stations, airports, hospitals, and also all the places important for traffic and, furthermore, railway or local transport timetables, and also the current flight schedules, and the navigation processor (2) evaluates said additional data.

4. Mobile radio receiver for use in an automotive vehicle according to Claim 2, **characterized in that** the digital radio receiver unit (5) receives further additional data, in particular current traffic disruptions, locations of sights, railway stations, airports, hospitals, and also all the places important for traffic and, furthermore, railway or local transport timetables, and also the current flight schedules of the airports that are continuously updated by the transmitter network and broadcast concomitantly, and the navigation processor (2) evaluates said additional data.

5. Mobile radio receiver for use in an automotive vehicle according to any one of Claims 1 to 4, **characterized in that** the memory unit (3) is re-writable.

6. Mobile radio receiver for use in an automotive vehicle according to any one of Claims 1 to 5, **characterized in that**
the navigation processor (2) performs a route calculation from all the data transmitted and, in doing so, includes all the means of transport and parking facilities available for the automotive vehicle near the automotive vehicle multimodally and/or multimedially in the route calculation, the navigation processor (2) offers a plurality of route proposals and determines the estimated travelling times relating thereto, and also the provisional costs.

7. Mobile radio receiver for use in a automotive vehicle according to any one of Claims 1 to 6, **characterized in that** the navigation processor (2) determines by means of the sensor unit (13) the current movement and/or travel direction status and the vehicle movement data and includes these in the navigation.

8. Mobile radio receiver for use in an automotive vehicle according to any one of Claims 1 to 7, **characterized in that** the digital radio receiver unit (5) receives the traffic radio messages broadcast with the digital radio signal of the transmitter network, passes them on to the navigation processor (2), the latter includes said information items in the route calculation and modifies the routes accordingly and/or proposes other routes, and the navigation processor (2) determines the national, the regional and the local traffic data from the data transmitted and includes them in the route planning in a location-related manner.

9. Mobile radio receiver for use in an automotive vehicle according to any one of Claims 1 to 8, **characterized in that** the navigation processor (2) activates the digital radio receiver unit (5) of the multimedia unit (4) so that it makes a transmitter network change if the navigation processor (2) needs data from another transmitter network and the route guidance and communication of the route to the driver of the automotive vehicle takes place optionally via one or more of the user interfaces (7, 9, 10, 11).

10. Mobile radio receiver for use in an automotive vehicle according to any one of Claims 1 to 9, **characterized in that**
the operating unit (7) is an output unit, in particular a visual output unit or a display,
the operating unit (8) is an input unit, in particular an acoustic input unit or voice input unit,
the operating unit (9) is an acoustic output unit, in particular a loudspeaker, and
the operating units (10, 11) are DAB front ends or DAB head units.

11. Mobile radio receiver for use in an automotive vehicle according to any one of Claims 1 to 10, **characterized in that** the route guidance takes place via the operating unit (7) and/or the operating unit (9) and/or the operating unit (10) and/or the operating unit (11).

12. Mobile radio receiver for use in an automotive vehicle according to any one of Claims 1 to 11, **characterized in that** a chipcard reader (14) is connected to the multimedia unit (4) and pay services can be used by means of the return channel and/or the chipcard reader of the mobile radio receiver and the user can order flight tickets or train tickets and/or make hotel bookings by means of the multimedia unit (4).

13. Mobile radio receiver for use in an automotive vehicle according to any one of Claims 1 to 12, **characterized in that** the multimedia unit (4) has a control unit (16) that controls the data input or data output from or into the user interfaces (7, 8, 9, 10, 11), respectively.

14. Mobile radio receiver for use in an automotive vehicle according to any one of Claims 1 to 13, **characterized in that** the multimedia unit (4) has interfaces (17) via which external appliances can be connected, the interfaces (17) are activated by the control unit (16), the external appliances are radio telephones, CD players, DVD players and said appliances are activated via the user interfaces (7, 8, 9, 10, 11).

15. Mobile radio receiver for use in an automotive vehicle according to any one of Claims 1 to 14, **characterized in that** an emergency call unit is incorporated that detects an emergency, such as, for example, an accident, and transmits an emergency message to a competent centre via the communications unit (15) and continuously records the vehicle data.

16. Mobile radio receiver for use in an automotive vehicle according to any one of Claims 1 to 15, **characterized in that** the digital radio receiver unit (5) receives multimedial data and emits them via the user interfaces (7-11) and the visual output unit (7) comprises at least two monitors, wherein one monitor is provided for displaying the navigation data and further monitors for displaying the multimedia data, and the position-determining unit (12) is a GPS unit.

## Revendications

1. Récepteur radio mobile destiné à être utilisé dans un véhicule automobile comportant une unité de navigation (1), des interfaces d'utilisateur (7, 8, 9, 10, 11) et une unité multimédia (4), constituée par au moins une unité de réception radio numérique (5), dans lequel l'unité de navigation (1) comporte un processeur de navigation (2) et une unité de mémoire (3), et une unité de détermination de position (12), une unité de détection (13) et une unité de communication (15) sont raccordées à l'unité de navigation (1), et les interfaces d'utilisateur (7, 8, 9, 10, 11) sont raccordées à l'unité multimédia (4) et sont commandées par une unité de commande (16),
**caractérisé en ce que**
dans l'unité de mémoire (3) de l'unité de navigation (1) sont mémorisées uniquement des données de base, notamment des autoroutes, des routes nationales, des routes principales et tous les noms de localités pour la navigation, que le récepteur radio reçoit une fois pour toutes, que le processeur de navigation (2) demande à un prestataire de services toutes les données nécessaires à la navigation, comme par exemple des noms de routes, des routes départementales de rang secondaire, des routes urbaines, au moyen de l'unité de communication (15) ou au moyen d'une unité de canal de retour (6), qui est disposée dans l'unité multimédia (4), transmet à cet effet l'emplacement actuel du véhicule automobile, déterminé au moyen de l'unité de détermination de position (12), et que les données encore nécessaires pour la navigation sont transmises par le prestataire de services conjointement avec le signal radio numérique, et que l'unité de réception radio numérique (5) reçoit les données demandées du prestataire de services et les transmet au processeur de navigation (2).

2. Récepteur radio mobile destiné à être utilisé dans un véhicule automobile comportant une unité de navigation (1), des interfaces d'utilisateur (7, 8, 9, 10, 11) et une unité multimédia (4), constituée par au moins une unité de réception radio numérique (5), dans lequel l'unité de navigation (1) comporte un processeur de navigation (2) et une unité de mémoire (3), et une unité de détermination de position (12), une unité de détection (13) et une unité de communication (15) sont raccordées à l'unité de navigation (1), et les interfaces d'utilisateur (7, 8, 9, 10, 11) sont raccordées à l'unité multimédia (4) et sont commandées par une unité de commande (16),
**caractérisé en ce que**
dans l'unité de mémoire (3) de l'unité de navigation (1) sont mémorisées uniquement des données de base, notamment des autoroutes, des routes nationales, des routes principales et tous les noms de localités pour la navigation, que le récepteur radio reçoit une fois pour toutes, que le processeur de navigation (2) reçoit toutes les données nécessaires pour la navigation, comme par exemple des noms de route, des routes départementales de rang secondaire, des routes urbaines, que le processeur de navigation (2) reçoit les autres données nécessaires pour la navigation comme par exemple des noms de routes, des routes départementales de rang inférieur, des routes urbaines avec le signal radio numérique en tant que données émises en permanence et que ces données sont réparties en des données dépassant la région, en des données de région et en des données locales, auquel cas le signal radio numérique contient des blocs de données dépassant la région, des blocs de données pour la région des blocs de données locaux, et le processeur de navigation (2) utilise ces données nécessaires et reçues pour la navigation.

3. Récepteur radio mobile destiné à être utilisé dans un véhicule automobile selon la revendication 1,
**caractérisé en ce que**
l'unité de réception radio numérique (5) reçoit d'autres données supplémentaires transmises par le prestataire de services, notamment des perturbations actuelles du trafic, des lieux méritant d'être vus, des gares, des aéroports, des hôpitaux, ainsi que tous les emplacements importants pour le trafic et en outre des indicateurs des chemins de fer et des moyens publics de trafic de proximité, ainsi que les indicateurs de vol actuels et le processeur de navigation (2) évalue ces données supplémentaires.

4. Récepteur radio mobile destiné à être utilisé dans un véhicule automobile selon la revendication 2,
**caractérisé en ce que**
l'unité de réception radio numérique (5) reçoit d'autres données supplémentaires transmises par le prestataire de services, notamment des perturbations actuelles du trafic, des lieux méritant d'être vus, des gares, des aéroports, des hôpitaux, ainsi que tous les emplacements importants pour le trafic et en outre des indicateurs des chemins de fer et des moyens publics de trafic de proximité, ainsi que les indicateurs de vol actuels des aéroports, qui sont actualisés et émis conjointement en permanence par la chaîne d'émetteurs et que le processeur de navigation (2) évalue ces données supplémentaires.

5. Récepteur radio mobile destiné à être utilisé dans un véhicule automobile selon l'une des revendications 1 à 4, **caractérisé en ce que** l'unité de mémoire (3) est réinscriptible.

6. Récepteur radio mobile destiné à être utilisé dans un véhicule automobile selon l'une des revendications 1 à 5, **caractérisé en ce que**
le processeur de navigation (2) réalise un calcul de trajet d'acheminement à partir des données transmises et insère tous les moyens de trafic, présents en dehors du véhicule automobile, et toutes les possibilités de parcage pour le véhicule automobile d'une manière multimodale et/ou par multimédia dans le calcul du trajet d'acheminement,
le processeur de navigation (2) soumet plusieurs propositions de trajets et détermine à cet effet la durée estimée du voyage et calcule les coûts prévisibles.

7. Récepteur radio mobile destiné à être utilisé dans un véhicule automobile selon l'une des revendications 1 à 6, **caractérisé en ce que**
le processeur de navigation (2) détermine, au moyen de l'unité de détection (13), l'état actuel de déplacement et/ou l'état actuel de la direction de déplacement et les données de déplacement du véhicule et insère ces données dans la navigation.

8. Récepteur radio mobile destiné à être utilisé dans un véhicule automobile selon l'une des revendications 1 à 7, **caractérisé en ce que**
l'unité de réception radio numérique (5) reçoit les signalisations radio de trafic émise par le signal radio numérique de la chaîne d'émetteurs, les transmet au processeur de navigation (2), et insère ces informations dans le calcul du trajet d'acheminement et propose les trajets d'acheminement et modifie de façon correspondante les trajets d'acheminement et/ou propose d'autres trajets, et le processeur de navigation (2) détermine les données dépassant la région, les données de région et les données de trafic locales à partir des données transmises et les insère, d'une manière rapportée au lieu, dans la programmation du trajet d'acheminement.

9. Récepteur radio mobile destiné à être utilisé dans un véhicule automobile selon l'une des revendications 1 à 8, **caractérisé en ce que**
le processeur de navigation (2) commande l'unité de réception radio numérique (5) de l'unité multimédia (4) afin que cette dernière exécute un changement de chaîne d'émetteurs, lorsque le processeur de navigation (2) a besoin des données d'une autre chaîne d'émetteurs et exécute le guidage sur trajet et la communication du trajet au conducteur du véhicule automobile, s'effectuent au choix au moyen d'une ou plusieurs des interfaces d'utilisateur (7, 9, 10, 11).

10. Récepteur radio mobile destiné à être utilisé dans un véhicule automobile selon l'une des revendications 1 à 9, **caractérisé en ce que**
l'unité de fonctionnement (7) est une unité de sortie, notamment une unité de sortie visuelle ou un dispositif d'affichage,
l'unité d'actionnement (8) est une unité d'entrée, notamment une unité d'entrée acoustique ou une unité d'entrée vocale,
l'unité de fonctionnement (9) est une unité de sortie acoustique, notamment un haut-parleur et
les unités d'actionnement (10, 11) sont des extrémités frontales d'un système DAB ou des unités de tête d'un système DAB.

11. Récepteur radio mobile destiné à être utilisé dans un véhicule automobile selon l'une des revendications 1 à 10, **caractérisé en ce que**
le guidage sur route s'effectue par l'intermédiaire de l'unité d'actionnement (7) et/ou de l'unité d'actionnement (9) et/ou de l'unité d'actionnement (10) et/ou de l'unité d'actionnement (11).

12. Récepteur radio mobile destiné à être utilisé dans un véhicule automobile selon l'une des revendications 1 à 11, **caractérisé en ce qu'**un lecteur de carte à puce (4) est raccordé à l'unité multimédia (4) et que des services avec paiement d'une taxe peuvent être utilisés au moyen du canal de retour et/ou du lecteur de carte à puce (14) du récepteur radio mobile et au moyen de l'unité multimédia (4), l'utilisateur peut commander des billets d'avion ou des billets de train et/ou payer ses frais d'hôtel.

13. Récepteur radio mobile destiné à être utilisé dans un véhicule automobile selon l'une des revendications 1 à 12, **caractérisé en ce que** l'unité multimédia (4) comporte une unité de commande (16), qui commande l'entrée ou la sortie de données dans ou hors des interfaces d'utilisateur (7, 8, 9, 10, 11).

14. Récepteur radio mobile destiné à être utilisé dans un véhicule automobile selon l'une des revendications 1 à 13, **caractérisé en ce que**
l'unité multimédia (4) comporte des interfaces (17), au moyen desquelles des appareils peuvent être raccordés à des appareils externes, que la commande des interfaces (17) est réalisée au moyen de l'unité de commande (16), que les appareils externes sont des téléphones hertziens, des lecteurs de disques CD, des lecteurs de disques DVD et que ces appareils sont commandés au moyen des interfaces d'utilisateur (7, 8, 9, 10, 11).

15. Récepteur radio mobile destiné à être utilisé dans un véhicule automobile selon l'une des revendications 1 à 14, **caractérisé en ce qu'**une unité de signalisation d'urgence est intégrée, unité qui identifie un cas d'urgence comme par exemple un accident, et au moyen d'une unité de communication (15) envoie un signalisation d'urgence à un emplacement associé et enregistre de façon permanente les données du véhicule.

16. Récepteur radio mobile destiné à être utilisé dans un véhicule automobile selon l'une des revendications 1 à 15, **caractérisé en ce que**
l'unité numérique de réception radio (5) reçoit des données multimédia et délivre ces dernières par l'intermédiaire des interfaces d'utilisateur (7-11), et une unité de sortie visuelle (7) est constituée par au moins deux moniteurs, un moniteur est prévue pour l'affichage des données de navigation et un autre moniteur pour l'affichage des données multimédia, et l'unité de détermination de position (12) étant une unité GPS.
